# EUROPEAN PATENT APPLICATION

(11) **EP 4 345 184 A1**
(43) Date of publication of application: **03.04.2024**
(21) Application number: 23198156.4
(22) Date of filing: 19.09.2023
(51) Int. Cl.: C23C 8/26, H01F 3/02, H01F 41/02, H02K 1/02

(54) **DUAL-PHASE MAGNETIC COMPONENTS AND METHODS OF FORMING THE SAME**

(30) Priority: 30.09.2022 US 202263411784 P
(71) Applicant: General Electric Company, Schenectady, NY 12345 (US)
(72) Inventor: HUANG, Shenyan, Niskayuna, 12309 (US); DIAL, Laura Cerully, Arden, 28704 (US); ZHANG, Wanming, Niskayuna, 12309 (US); BURESH, Steve John, Niskayuna, 12309 (US)
(74) Representative: Openshaw & Co.

(57) **Abstract**

Dual-phase magnetic components (100) include an intermixed first region (20) and second region (30) formed from a single material, wherein the first region (20) includes a magnetic ferrous composition, and wherein the second region (30) includes a non-magnetic austenite composition and a dispersion of nitride precipitates.

## Description

### FIELD

This disclosure relates generally to components having multiple magnetic and non-magnetic regions, and a methods of forming the same. More particularly, the disclosure relates to components having multiple magnetic and non-magnetic regions, and formation of the same by nitriding.

### BACKGROUND

The need for high power density and high efficiency electrical machines (i.e., electric motors and generators) has long been prevalent for a variety of applications, particularly for hybrid and/or electric vehicle traction/propulsion applications. The current trend in hybrid/electric vehicle traction/propulsion motor applications is to increase rotational speeds to increase the machine's power density, and hence reduce its mass and cost. However, it is recognized that when electrical machines are used for traction applications in hybrid/electric vehicles, there is a clear tradeoff between power density, efficiency, and the machine's constant power speed range limited by rotor mechanical strength-and that this tradeoff presents numerous design challenges.

The power output of an electric machine may be increased by increasing the machine size, improving thermal management, increasing rotor speed, or by increasing the magnetic utilization. The magnetic utilization may be increased by using a combination of processing and alloying of a rotor lamination to create a dual-phase magnetic material by developing localized areas of high and low permeability. The localized areas of high and low permeability generally reduce flux losses during rotor operation.

A range of ferrous based soft magnetic compositions of the rotor lamination may be austenitized by a combination of processes to form regions of low permeability. Phase transformation at selected regions may be thermally driven in the presence of carbides in the alloy. Upon local heating, the carbides that are present at selected locations dissolve in the matrix and depress the martensite start temperature, thereby aiding the stabilization of austenite regions at room temperature. Additionally, or alternatively, phase transformation may be driven through a nitriding process, wherein the alloy is heat treated in the presence of nitrogen.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
Fig. 1 illustrates a masked component for forming a dual-phase magnetic component in accordance with an exemplary aspect of the present disclosure.
Fig. 2 illustrates a masked component for forming a dual-phase magnetic component in accordance with an exemplary aspect of the present disclosure.
Fig. 3 illustrates a masked component for forming a dual-phase magnetic component in accordance with an exemplary aspect of the present disclosure.
Fig. 4 illustrates a dual-phase magnetic component formed after removing a coating, such as shown in FIG. 3, in accordance with an exemplary aspect of the present disclosure.
Fig. 5 illustrates an exemplary topology of a dual-phase magnetic component that may be obtained by using the methods described herein in accordance with an exemplary aspect of the present disclosure.
Fig. 6 illustrates a method for forming a dual-phase magnetic component in accordance with an exemplary aspect of the present disclosure.
FIG. 7 illustrates another method for forming a dual-phase magnetic component in accordance with an exemplary aspect of the present disclosure.
Fig. 8 illustrates a calculated equilibrium phase diagram of an alloy composition of Fe-20Cr-5Mn (wt.%).
Fig. 9 illustrates a microscopic cross sectional image of a component that was heat treated using a heat treatment temperature below the nitride solvus temperature.
Fig. 10 illustrates yield stress test results for multiple components that were heat treated at temperatures above and below the nitride solvus temperature.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

Different embodiments of the present disclosure relate to a strengthened dual-phase magnetic component, a magnetic composition of the strengthened dual-phase magnetic component, and a method of forming the strengthened dual-phase magnetic component.

In some embodiments of the disclosure, a strengthened dual-phase magnetic component is disclosed. The term "dual-phase magnetic component" as used herein may be a magnetic part of any product, such as for example, a rotor component or a stator component of a motor that has intermixed first and second regions, where the first region includes a magnetic phase and the second region includes a non-magnetic phase. The "intermixed first and second regions" hereby means that there are many first regions and second regions that are in the vicinity of each other.

Thus, the dual-phase magnetic component has dual magnetic regions with one set of regions having a magnetic phase, and another set having a non-magnetic phase. As used herein, the "magnetic phase" is a region where greater than 99 volume % of the region is magnetic, and in general, would act as a magnetic region. Further, a "non-magnetic phase" may be the region where greater than 90 volume % of the region is non-magnetic. The magnetic component as used herein is usually prepared from a single material. As an example, the material may be a composite magnetic member which is formed by providing a ferromagnetic portion and a non-magnetic portion, by nitriding in a controlled atmosphere. When the magnetic component is made using a single material, the negative effects of bonding a ferromagnetic portion and a non-magnetic portion are reduced by ensuring reliability, hermeticity, and the bond strength of the magnetic component.

The "magnetic phase" as used herein is a material in a magnetic state having a relative permeability greater than 1. In some embodiments, the relative permeability of the magnetic phase of the first region of the magnetic component is greater than 100, and a saturation magnetization is greater than 1.5 Tesla. A "non-magnetic phase" as used herein has greater than 90 volume % of the material in which the permeability is approximately 1, and the saturation magnetization is about zero.

Austenite, also known as gamma phase iron (y-Fe), is a metallic, non-magnetic allotrope of iron or a solid solution of iron. Heating the iron, iron-based metal, or steel to a temperature at which it changes crystal structure from ferrite to austenite is called austenitization. The addition of certain alloying elements, such as manganese, nickel, nitrogen, and carbon, can stabilize the austenitic structure even at room temperature. A dual-phase magnetic component may be formed by stabilizing austenite at room temperature, in some regions of the magnetic component, while retaining the strongly ferromagnetic martensite or ferrite phases at some other regions of the magnetic component.

The second (non-magnetic) region includes nitrogen in a quantity that stabilizes the austenite phase. Like carbon, as nitrogen dissolves into a ferrous alloy, the austenite phase is stabilized. Generally, the presence of carbides, which serve to stabilize the austenite phase upon local heat treatment and dissolution, is established by alloying the initial materials with carbon in the melt.

High-temperature solution nitriding can be used to diffuse nitrogen gas into a ferrous based substrate, induce phase transformation from the ferrous phase (magnetic) to the austenite phase (non-magnetic), and thus create non-magnetic phase at the desired regions in a stator or rotor. When applied in an interior permanent magnet rotor topology, the non-magnetic phase can be assigned at bridges and center posts to reduce magnetic flux leakage substantially. These non-magnetic locations also require high stress capability due to the centrifugal force of permanent magnets experienced in high speed rotation. Higher yield strength of the non-magnetic phase compared to conventional electrical steels (such as HF10, M19 grades) may be achieved through high-temperature solution nitriding. However, the yield strength is still lower than the commercial high strength FeCo laminate (such as Hiperco50Hs) and yield strength can drop at temperatures of 150 °C to 200 °C. Thus, application in high-temperature and/or high-speed electric machines may be limited by strength capability of the dual phase laminate technology.

The current disclosure utilizes a heat treatment temperature that is below the nitride solvus temperature to produce a dual phase laminate technology with increased stress and temperature capability compared to nitriding using exclusively higher temperature ranges that are above the nitride solvus temperature. Thus, in addition to nitrogen diffusion, the disclosed nitriding process generates a microstructure comprising a non-magnetic austenite phase and a dispersion of nitride precipitates in the non-magnetic region. Without being bound to one particular theory, it is believed the resulting improved stress and temperature capability is a result of a dual strengthening mechanism resulting from utilizing a nitriding temperature below a nitride solvus of the material. That is, both nitride precipitate strengthening and solid solution strengthening by atomic interstitial nitrogen are believed to contribute to the improved strength and temperature performance.

In some embodiments, a method of preparing a magnetic component is disclosed. Thermodynamic and empirical calculations may be used to predict ferrous alloy compositions that upon the addition of nitrogen at elevated temperatures form the austenite phase. A magnetic component using the designed ferrous alloy composition may be formed by using the traditional methods. In some embodiments, the formed magnetic component is subjected to selective nitriding of the near-final component, without the need to substantially alter the shape and size of the formed magnetic component after nitriding. As used herein the term "selective nitriding" is the nitriding of some (required) regions of the magnetic component, without substantially altering the ferromagnetic nature of the nearby regions. The ferromagnetic nature of the nearby regions may be considered to be "substantially altered," if the average saturation magnetization of those regions is reduced by more than 5 percent.

In some embodiments, the selective nitriding of the magnetic component may be attained by using a mask (e.g., ceramic slurry or metallic coating) that discourages nitrogen diffusion into the magnetic component at some regions.

Nitriding may be carried out through a solid, liquid, gaseous, or plasma route. In some embodiments of the present disclosure, elevated temperature gas nitriding is used as the preferred method to introduce nitrogen to the part. The elevated temperatures in this technique allow for fast diffusion of nitrogen, providing a quick processing route. Alternately, plasma nitriding may be used for the nitrogen diffusion. In order to avoid nitrogen diffusion in those areas which are intended to stay ferritic (and thus magnetic), in some embodiments, a coating is applied to locations where nitrogen diffusion is not desirable. Thus, in this embodiment, the preselected regions that correspond to the regions that are supposed to remain magnetic are masked, using the coating as a nitrogen stop-off material (i.e., inhibiting and/or substantially stopping the nitrogen from entering into the masked area).

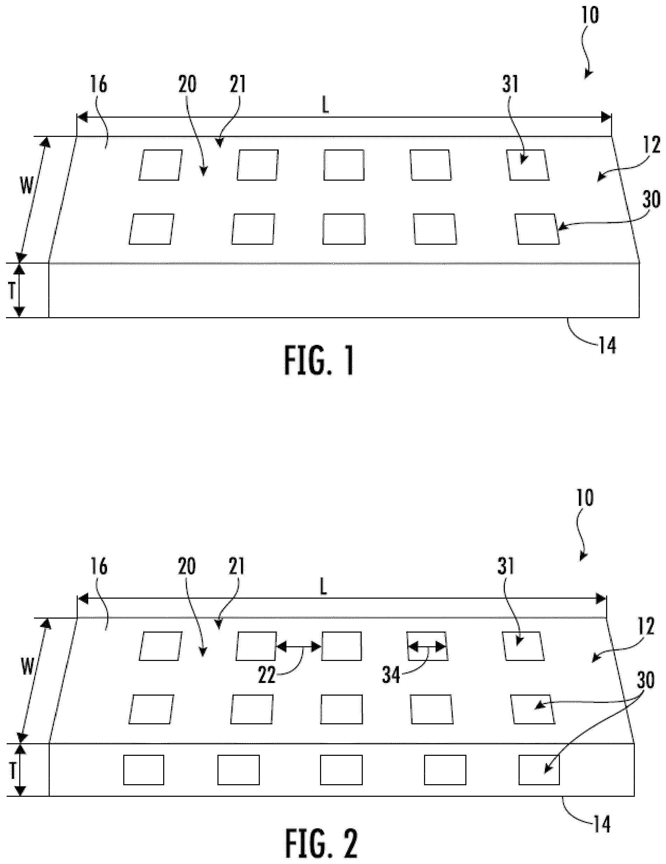

Referring to FIG. 1, an initial component is illustrated that initially includes a magnetic ferrous phase composition and is subjected to selective nitriding to form the strengthened dual-phase magnetic component disclosed herein. The initial component 10 is formed of a ferromagnetic material, in the size and shape required for the final application of the resulting component. The initial component 10 is, in some embodiments, formed of a composition that has a very reduced concentration of carbon (e.g., a concentration of carbon that is less than 0.05 weight %, such as being substantially free of carbon), and may be of any shape and size. In some embodiments, the initial component is an iron chromium alloy. In some embodiments, the initial component is an iron chromium manganese alloy. In even some embodiments, the initial component an iron chromium manganese alloy having 18 to 22 weight percent chromium and 4 to 6 weight percent manganese (such as, for example Fe-20Cr-5Mn (wt.%)).

For ease of understanding herein, the initial component 10 is depicted as having a rectangular shape with a top surface 12 and a bottom surface 14 in FIGS. 1 and 2, although it is to be understood that the shape of the initial component 10 may be as desired for the component's application. The initial component 10 has a certain length (l), width (w), and thickness (t).

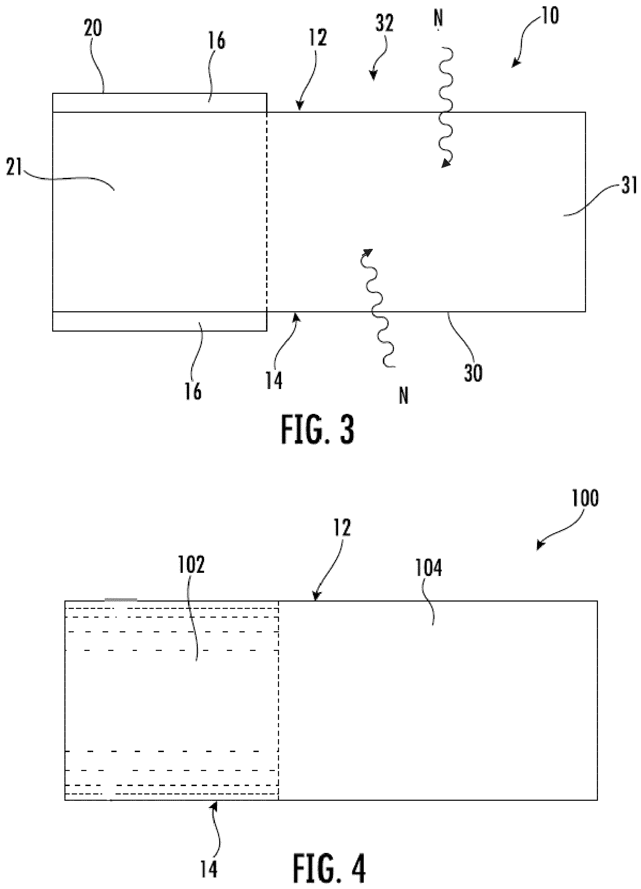

As more particularly shown in FIG. 3, a mask 16 is applied on a portion of the surfaces 12, 14 to define a first region 20 corresponding to a masked area 21 and a second region 30 corresponding to an unmasked, exposed area 31.

The initial component 10 thus includes two marked regions, a first region 20 and a second region 30. The regions are situated so that the first region 20 (corresponding to an underlying masked area 21) has a mask 16 on its surface portion of the component, and second region 30 (corresponding to an unmasked area 31) that has an unmasked surface (i.e., substantially free from any coating thereon). The first region 20 is designed to be the magnetic region, and is masked, using the mask 16 in the initial component 10. The second region 30 is not masked and hence allows the nitrogen to diffuse through the initial component 10, making the region non-magnetic. One skilled in the art would understand that depending on the shape and size of the required magnetic and non-magnetic regions, the masks may be designed of different shapes and at different surfaces.

Nitrogen is diffused into the initial component 10 through gas nitriding in a nitrogen-rich atmosphere at a treatment temperature and for a treatment time sufficient for diffusing nitrogen into the initial component 10 in the second region 30. The treatment temperature also includes at least one treatment at a temperature or temperatures below the nitride solvus temperature for the initial component 10 (i.e., of the magnetic ferrous phase or composition) so that nitrides are formed in the second region 30. Without wishing to be bound by any particular theory, it is believed that the yield strength of the resulting alloy increases when using the treatment temperatures disclosed herein by introducing the dual strengthening of both nitrogen in solid solution and the presence of nitrides in the microstructure (e.g., chromium nitrides).

For instance, in some embodiments, the treatment temperature for nitriding the initial component 10 can be at least 10 °C below the nitride solvus temperature, at least 25°C below the nitride solvus temperature, at least 50°C below the nitride solvus temperature, or even at least about 100 °C below the nitride solvus temperature of the magnetic ferrous composition. The treatment temperature can also refer to a range of temperatures, such as when a treatment temperature fluctuates or when a treatment temperature is ramped up or down during the heat treatment process. For instance, in some embodiments, the treatment temperature for nitriding the initial component 10 can be between at least 10 °C below the nitride solvus temperature and at least 100 °C below the nitride solvus temperature.

The treatment time of the initial component during the treatment temperature can be selected to achieve the at least partial transformation of the magnetic ferrous phase to the non-magnetic austenite phase, nitrogen diffusion, and formation of nitride precipitates. For instance, the treatment time can depend on the size, shape and geometry of the initial component, the treatment temperature, and the material composition. For instance, in some embodiments, the treatment time may range from 30 minutes to three hours.

In some embodiments, the initial component 10 can undergo a single heat treatment using a treatment temperature below the nitride solvus temperature. The single heat treatment thereby facilitates both nitrogen diffusion and nitride precipitate formation. In some embodiments, the initial component 10 can undergo multiple heat treatments and different temperatures, wherein at least one treatment temperature is below the nitride solvus temperature. For instance, a first treatment temperature for nitriding the initial component 10 can be above the nitride solvus temperature. The first treatment temperature may occur in a first treatment environment that includes nitrogen to facilitate nitrogen diffusion and so that at least a portion of the magnetic ferrous phase in the second region 30 (defined by the exposed area 31) transforms into a non-magnetic austenite phase. Following the first treatment temperature, the initial component 10 can be treated at a second treatment temperature that is below the nitride solvus temperature to facilitate the formation of nitride precipitates in the second region 30.

Suitable treatment temperatures, treatment times, and combinations thereof will vary based on the specific material composition of the initial component 10, such as based on its specific nitride solvus temperature. For instance, in some embodiments, the initial component 10 can comprise iron chromium manganese alloy having 18 to 22 weight percent chromium and 4 to 6 weight percent manganese. In such embodiments, the treatment temperature can be greater than or equal to 1000 °C and less than or equal to 1100 °C, greater than or equal to 1025 °C and less than or equal to 1100 °C, greater than or equal to 1050 °C and less than or equal to 1100 °C, greater than or equal to 1060 °C and less than or equal to 1090 °C, greater than or equal to 1070 °C and less than or equal to 1080 °C. Likewise, the treatment time for nitriding the initial component 10 comprising an iron chromium manganese alloy having 18 to 22 weight percent chromium and 4 to 6 weight percent manganese can be for greater than or equal to 30 minutes, greater than or equal to 60 minutes, greater than or equal to 90 minutes, or greater than or equal to 120 minutes.

The treatment temperature and the treatment time can be combined to nitride the initial component 10, including any combination of ranges or parameters disclosed herein. For instance, in some embodiments where the initial component 10 comprises an iron chromium manganese alloy having 18 to 22 weight percent chromium and 4 to 6 weight percent manganese, the treatment temperature can be greater than or equal to 1050 °C and less than or equal to 1100 °C and the treatment time for nitriding the initial component 10 can be greater than or equal to 90 minutes and less than or equal to 150 minutes. While specific temperature and time ranges are disclosed herein with respect to initial components comprising an iron chromium manganese alloy having 18 to 22 weight percent chromium and 4 to 6 weight percent manganese , it should be appreciated that these are not intended to be limiting for other initial components comprising different compositions.

In some embodiments, a treatment environment having a nitrogen-rich atmosphere is used. For example, the nitrogen-rich atmosphere may include 90% nitrogen by volume or greater (e.g., 95% nitrogen by volume or greater). In some embodiments, nitriding is conducted in a substantially pure nitrogen atmosphere. The substantially pure nitrogen atmosphere may be created by filling nitrogen in a furnace cavity after evacuating the air from the furnace cavity, then purging with nitrogen or continuously flowing nitrogen into the atmosphere chamber during processing. In some embodiments, nitriding is conducted at a pressure greater than atmospheric pressure.

The mask 16 may be applied onto the surfaces 12, 14 of the initial component 10 depending on the desired pattern of nitrogen diffusion for the initial component 10. In some embodiments, all surfaces of the initial component 10 are defined by either the first region 20 or the second region 30.

The mask 16 may be formed from any suitable material to prevent nitrogen diffusion into the area of the initial component 10 masked by the masking material. For instance, in some embodiments, the mask 16 may comprise a ceramic based material that is suitable for inhibiting nitriding therethrough. In some embodiments, the mask 16 may comprise a metal or metal alloy that is suitable for inhibiting nitriding therethrough. In some embodiments, the mask 16 may comprise a coating formed to a coating thickness of 0.1 µm to 25 µm in the masked area, such as a coating thickness of 0.5 µm to 10 µm in the masked area (e.g., 1 µm to 5 µm).

As illustrated in FIG. 1, the mask 16 is applied at the surfaces 12, 14 corresponding to the first region 20 and also at the surfaces covering the thickness of the initial component 10. Thus, in FIG. 1, nitriding would occur only through the second regions 30 on the top and bottom surfaces 12, 14 to form the unmasked area 31, and not through the thickness of the component. In FIG. 2, the surfaces through the thickness of the initial component 10 further include the masked and unmasked areas and hence, the nitrogen diffusion occurs from the top, bottom, and side surfaces in a controlled way.

When the magnetic component is subjected to gas nitriding, the nitrogen diffuses into the initial component 10, through all unmasked surfaces of the initial component 10, including the top surface 12, bottom surface 14, and all of the unmasked side surfaces of the component. The nitrogen during nitriding is diffused from the surfaces into the interior portions of the initial component 10 in the exposed areas 31. This diffused nitrogen, in conjunction with the composition of the magnetic component, changes the local phase stability in those regions, and converts those regions into non-magnetic austenite. Moreover, by utilizing a treatment temperature below the nitride solvus temperature, additional nitrogen beyond that which can held in solution with austenite can cause the additional precipitation of nitrides during the nitriding process. Even though the nitrogen diffuses through the surface, the nitriding parameters allow the nitrogen to diffuse further into the length, width, and thickness of the magnetic component, through all the surfaces of the initial component 10, while the masked areas 21 prevent substantial nitrogen diffusion through those regions.

The nitrogen may be diffusing into the interior of the initial component 10 through the non-masked surface regions, but depending on the pressure and temperature, and certain other parameters, the diffused nitrogen may also slightly undercut the surface masked regions 20, thereby diffusing into some of the interior masked regions 21. Hence, the strict boundaries of the magnetic and non-magnetic regions in the surface portion may be more diffuse in the interior portions. As a result, the percentage of non-magnetic regions and nitride precipitates in the interior portion may be greater than the percentage of the non-magnetic regions and nitride precipitates in the surface portion. Thus, in some embodiments, the volume % of the second region in the interior portion is equal to or greater than the volume % of the second region in the surface portion. Thus, if a hypothetical line starting from the surface of a second, non-magnetic, region is drawn through the interior portion in a direction perpendicular to the surface portion, it is highly likely that the perpendicular line encounters substantially 100% of the second region. However, the same may not always be true for a line that is drawn in the same manner, starting from the surface of a first, magnetic region. In some embodiments, an "undercut" of the non-magnetic phase is less than 200 micrometers.

Through empirical and thermodynamic calculations, the parameters of nitriding may be adjusted, and the nitrogen diffusion at different directions may be predicted for certain regions of the initial component 10, and accordingly, the mask size and shape may be altered so that the end product obtained is approximately the desired outcome of the nitriding process.

The under-cutting of the non-magnetic phase may be less in the thinner magnetic components. In thinner components, the majority of the nitrogen diffuses through the top and bottom surfaces 12, 14 respectively (FIG. 2), and the amount of undercut may be reduced. Additionally, less time is required to achieve through-thickness nitrogen penetration, thus reducing the amount of time in which additional nitrogen diffuses below the mask, creating the undercuts. In some embodiments, the thickness of the initial component 10 is in a range from 0.1 mm to 5 mm. The desired pattern of the magnetic and non-magnetic regions of this component may be obtained by diffusing the nitrogen through the selectively masked top surface 12 and bottom surface 14, keeping the side surfaces of the thickness t completely masked.

Width 22 (FIG. 2) of the mask of the masked area 21 is the dimension between the exposed areas 31, and may be designed as per the requirement of the initial component 10. In some embodiments, a width 34 of each of the second regions 30 in the surface is greater than 0.5 mm. In a further embodiment, a width of each of the second regions 30 in a plane perpendicular to the thickness t is greater than 0.5 mm. (As previously explained, the dimension "w" in FIG. 2 represents the overall width of the initial component 10.)

Nitriding of the magnetic component at designed conditions allows the introduction of a tailored amount of nitrogen to be diffused into the magnetic component. In some embodiments, the second (unmasked) region 30 includes greater than 0.4% of nitrogen. The intermixing and the concentration of nitrogen is not only limited to the unmasked areas of the surface but is present in both the surface portion and the interior portion of the initial component 10. The concentration of nitrogen in the surface portion and the interior portion need not be uniform.

FIG. 4 shows a dual-phase magnetic component 100 after nitriding. The dual-phase magnetic component 100 includes magnetic areas 102 (corresponding to the first region 20 of FIG. 3) and non-magnetic areas 104 (corresponding to the second region 30 of FIG. 3). In some embodiments, the non-magnetic areas 104 include a non-magnetic austenite alloy composition having a nitrogen concentration that is 0.4% by weight or greater, 0.5% by weight or greater, 0.7% by weight or greater, 0.9% by weight or greater, or 1.0% by weight or greater. In some embodiments, the magnetic areas 102 include a ferrous alloy composition having a nitrogen concentration that is 0.1% by weight or less (e.g., 0.05 wt. % of less).

Moreover, as a result of the treatment process subtilizing a treatment temperature below the nitride solvus temperature, the non-magnetic areas 104 (corresponding to the second region 30 of FIG. 3) include a dispersion of nitride precipitates (not illustrated) in its microstructure. The amount of nitride precipitates may depend on, for example, the treatment environment (e.g., concentration of nitrogen and pressure), the treatment temperature, the treatment time, and the specific material composition. In some embodiments, the plurality of nitride precipitates may form between greater than 0% and less than or equal to 13% of a cross-sectional area of the second region. It should be appreciated that the percentage of cross-sectional area measurements should be obtained using a large enough measurement area so as to not disproportionally focus on an isolated region that is not representative of the overall region. For instance, the cross-sectional area used for obtaining the measurement of nitride precipitates in the second region may be at least 200 µm x 200 µm. In some embodiments, the plurality of nitride precipitates may form greater than 2% to less than or equal to 10% of a cross-sectional area of the second region. In even some embodiments, the plurality of nitride precipitates may form greater than 5% to less than or equal to 8% of a cross-sectional area of the second region.

Depending on the applications, the desired magnetic region and the non-magnetic region shapes and ratios may vary, and the diffusion of nitrogen may be designed to satisfy these requirements. Accordingly, in some embodiments, a volume percent of the first region in the surface and interior portions is equal to or greater than the volume percent of the second region in the surface and interior portions. In some embodiments, at least one of the first and second regions has an interconnected geometry. The "interconnected geometry" as used herein implies that a region is connected all through the component and is hence not isolated completely from the similar regions, being surrounded by the other regions completely.

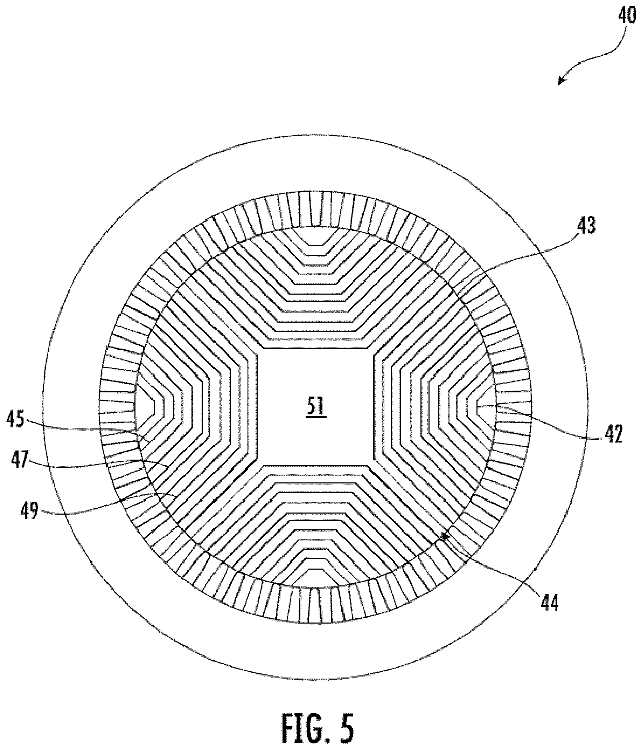

Different topologies may be presented, having dual-phase magnetic materials, by using this technology. FIG. 5 of the present application shows an example of a topology that could benefit from the dual-phase materials. The component 40 can represent a portion of the reluctance machine, including a magnetic region 42 and a non-magnetic region 44, collectively referred to as "laminated segments" below. The selectively shaped rotor 43 of the component 40 is configured as a four-pole machine. Each pole can comprise a plurality of the axially extending, radially positioned ("stacked") laminated segments 45, 47, 49, and the like, which extend from each pole, terminating at a central rotor shaft 51.

With continued reference to FIG. 5, the laminated segments effectively guide the magnetic flux into and out of the rotor 43. The magnetic regions 42 constrain the path of the magnetic flux, while the non-magnetic regions 44 ensure a relatively high density of magnetic flux lines coming out of the surface of the rotor and going into an air gap between the rotor and the stator. In manufacturing these types of reluctance machines according to conventional techniques, magnetic and non-magnetic laminations usually had to be assembled by various mechanical/metalworking steps, e.g., cutting and welding.

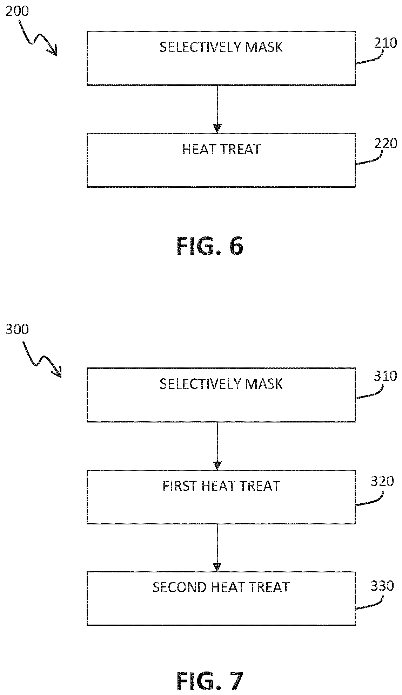

With reference now to FIG. 6, a method 200 is illustrated for forming a dual-phase magnetic component as exemplarily disclosed herein. The method 200 first includes step 210 in masking a first region of an initial component to form a masked area and leaving a second region of the initial component unmasked to form an exposed area.

As disclosed herein, the initial component can be formed of a ferromagnetic material, in the size and shape required for the final application of the resulting component. The initial component is, in some embodiments, formed of a composition that has a very reduced concentration of carbon (e.g., a concentration of carbon that is less than 0.05 weight %, such as being substantially free of carbon), and may be of any shape and size. In some embodiments, the initial component is an iron chromium alloy. In some embodiments, the initial component is an iron chromium manganese alloy. In even some embodiments, the initial component comprises an iron chromium manganese alloy having 18 to 22 weight percent chromium and 4 to 6 weight percent manganese.

The selective masking in step 210 includes any suitable technique that prevents nitrogen diffusion through the initial component during the subsequent heating operation. For example, as disclosed herein, the masking can be achieved through a ceramic material application and be designed of different shapes and at different surfaces of the initial component.

The method 200 further includes step 220 in heat treating the initial component to a treatment temperature in the presence of nitrogen gas at a treatment temperature below the nitride solvus temperature. As a result of heat treating in step 220, nitrogen diffuses into the exposed area of the initial component, the magnetic ferrous composition is transformed into a non-magnetic austenite composition, and nitride precipitates are formed. The heat treatment in step 220 can be performed at relatively lower temperatures and/or the treatment time can be performed for relatively longer durations compared to other nitriding operations of similar alloys.

For instance, as disclosed herein, the treatment temperature in step 220 for nitriding the initial component 10 can be at least 10 °C below the nitride solvus temperature, at least 25°C below the nitride solvus temperature, at least 50°C below the nitride solvus temperature, or even at least about 100 °C below the nitride solvus temperature. The treatment temperature can also refer to a range of temperatures, such as when a treatment temperature fluctuates or when a treatment temperature is ramped up or down during the heat treatment process. For instance, in some embodiments, the treatment temperature for nitriding the initial component 10 can be between 10 °C below the nitride solvus temperature and 100 °C below the nitride solvus temperature.

With reference no to FIG. 7, another method 300 is illustrated for forming the dual-phase magnetic component exemplarily disclosed herein. Compared to the method 200 of FIG. 6, the method 300 illustrated in FIG. 7 utilizes multiple heat treatment steps.

Similar to the method 200 in FIG. 6, the method 300 first includes step 310 masking a first region of an initial component to form a masked area and leaving a second region of the initial component unmasked to form an exposed area. As disclosed herein, the initial component can be formed of a ferromagnetic material, in the size and shape required for the final application of the resulting component. The initial component is, in some embodiments, formed of a composition that has a very reduced concentration of carbon (e.g., a concentration of carbon that is less than 0.05 weight %, such as being substantially free of carbon), and may be of any shape and size. In some embodiments, the initial component is an iron chromium alloy. In some embodiments, the initial component is an iron chromium manganese alloy. In even some embodiments, the initial component comprises an iron chromium manganese alloy having 18 to 22 weight percent chromium and 4 to 6 weight percent manganese.

The masking in step 310 includes any suitable technique that prevents nitrogen diffusion through the initial component during the subsequent heating operation. For example, as disclosed herein, the masking can be achieved through a ceramic and be designed of different shapes and at different surfaces of the initial component.

The method 300 further includes step 320 in heat treating the initial component to a first treatment temperature in a first treatment environment that includes nitrogen. The first treatment temperature transforms at least a portion of the magnetic ferrous phase in the exposed area into a non-magnetic austenite phase. In some embodiments the first treatment temperature can be above the nitride solvus temperature of the magnetic ferrous composition.

The method 300 further includes step 330, after step 320, in heat treating the initial component to a second treatment temperature that is below the nitride solvus temperature of the magnetic ferrous phase to form nitride precipitates. As disclosed herein, the treatment temperature in step 330 for can be at least 10 °C below the nitride solvus temperature, at least 25°C below the nitride solvus temperature, at least 50°C below the nitride solvus temperature, or even at least about 100 °C below the nitride solvus temperature. The treatment temperature can also refer to a range of temperatures, such as when a treatment temperature fluctuates or when a treatment temperature is ramped up or down during the heat treatment process. For instance, in some embodiments, the treatment temperature for nitriding the initial component 10 can be between at least 10 °C below the nitride solvus temperature and at least 100 °C below the nitride solvus temperature. Moreover, step 330 can be performed at the same treatment environment as the first treatment environment, or can be performed in a second treatment environment different than the first treatment environment, such as by varying the pressure, the amount of nitrogen in the atmosphere (or removing it all together), or other environmental conditions.

### EXAMPLE

Initial components of the same initial composition were heat treated in the presence of nitrogen at different temperatures and for different times. The components were then analyzed with respect to yield stress at different temperatures.

Each initial component had an initial composition of iron chromium manganese alloy having 20 weight percent chromium and 5 weight percent manganese (Fe-20Cr-5Mn (wt.%)). The components were then heat treated in a nitrogen rich atmosphere comprising more than 98 % percent nitrogen at 1 atm.

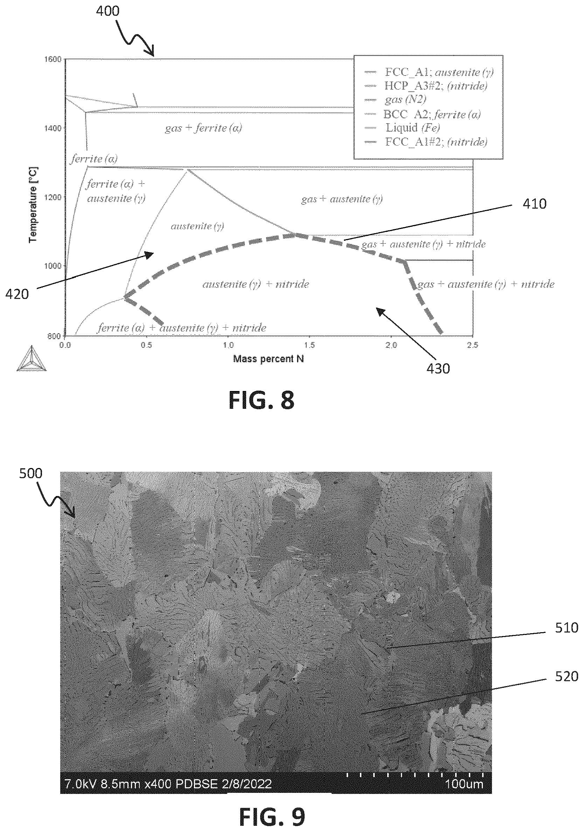

FIG. 8 illustrates a calculated equilibrium phase diagram 400 of the alloy composition Fe-20Cr-5Mn (wt.%) illustrating the predicted thermodynamically stable phases in the alloy at a range of temperatures and nitrogen concentrations. Notably, the phase diagram includes a nitride solvus temperature line 410. FIG. 8 further illustrates a first treatment temperature window 420 being above the nitride solvus temperature line 410, and a second treatment temperature window 430 being below the nitride solvus temperature line 410. Three sets of initial components of the alloy composition Fe-20Cr-5Mn (wt.%) were treated at a heat treatment temperature above the nitride solvus temperature line 410 in the first treatment temperature window 420. Three different sets of initial components of the alloy composition Fe-20Cr-5Mn (wt.%) were treated at a heat treatment temperature below the nitride solvus temperature line 410 in the second treatment temperature window 430.

FIG. 9 illustrates a microscopic cross sectional image of a component that was heat treated using a heat treatment temperature below the nitride solvus temperature line 410 (FIG. 8) in the second treatment temperature window 430 (FIG. 8). As illustrated, the microstructure includes a plurality of nitride precipitates 510 dispersed with the austenite phase regions 520.

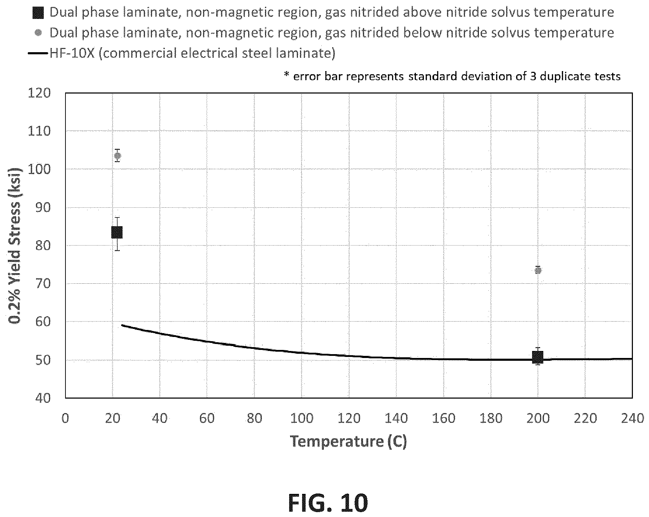

FIG. 10 illustrates yield stress test results at different temperatures for the components heat treated above and below the nitride solvus temperature. A further comparison is illustrated for the yield stress properties at different temperatures for the commercially available steel laminate HF-10X.

As illustrated, the yield stress was significantly higher for components treated at a treatment temperature below the nitride solvus temperature. At room temperature, the components treated at a treatment temperature below the nitride solvus temperature had a 0.2% yield stress of about 102-105 ksi, compared to the components treated at a treatment temperature above the nitride solvus temperature having a 0.2% yield stress of about 79-88 ksi. The components treated at a treatment temperature below the nitride solvus temperature also had better stress performance at elevated temperatures. As illustrated, at 200 °C, the components treated at a treatment temperature below the nitride solvus temperature had a 0.2% yield stress of about 73-75 ksi, compared to the components treated at a treatment temperature above the nitride solvus temperature having a 0.2% yield stress of about 49-53 ksi.

The initial components that were heat treated at a temperature below the nitride solvus temperature where proven to have higher yield strength than the initial components that were heat treated at a temperature above the nitride solvus temperature.

Further aspects are provided by the subject matter of the following clauses:
A dual-phase magnetic component comprises an intermixed first region and second region formed from a single material; wherein the first region comprises a magnetic ferrous composition; and wherein the second region comprises a non-magnetic austenite composition and a dispersion of nitride precipitates.

The dual-phase magnetic component of any clause herein, wherein the second region comprises greater than or equal to 0.4% nitrogen by weight.

The dual-phase magnetic component of any clause herein, wherein the second region comprises greater than or equal to 0.7% nitrogen by weight.

The dual-phase magnetic component of any clause herein, wherein the first region comprises less than or equal to 0.1% nitrogen by weight.

The dual-phase magnetic component of any clause herein, wherein the dispersion of nitride precipitates form between greater than 0% and less than or equal to 13% of a cross-sectional area of the second region.

The dual-phase magnetic component of any clause herein, wherein second region has a 0.2% yield stress at room temperature that is greater than or equal to 70 ksi.

The dual-phase magnetic component of any clause herein, wherein the first region is substantially free of nitride precipitates.

The dual-phase magnetic component of any clause herein, wherein the single material comprises an iron chromium alloy.

The dual-phase magnetic component of any clause herein, wherein the dual-phase magnetic component is a stator component or a rotor component.

A method of forming a dual-phase magnetic component from an initial component comprising a magnetic ferrous phase composition, the method comprising masking a first region of the initial component to form a masked area and leaving a second region of the initial component unmasked to form an exposed area; and heat treating the initial component at a treatment temperature in a treatment environment comprising nitrogen, the treatment temperature being below a nitride solvus temperature of the magnetic ferrous phase, to transform at least a portion of the magnetic ferrous phase in the exposed area into a microstructure comprising a non-magnetic austenite phase and a dispersion of nitride precipitates.

The method of any clause herein, wherein the treatment temperature is at least 10 °C below the nitride solvus temperature.

The method of any clause herein, wherein the magnetic ferrous phase comprises an iron chromium alloy.

The method of any clause herein, wherein the magnetic ferrous phase comprises an iron chromium manganese alloy.

The method of any clause herein, wherein the magnetic ferrous phase 18 to 22 weight percent chromium and 4 to 6 weight percent manganese.

The method of any clause herein, wherein the treatment temperature is greater than or equal to 1000 °C and less than or equal to 1100 °C.

A method of forming a dual-phase magnetic component from an initial component comprising a magnetic ferrous phase, the method comprising masking a first region of the initial component to form a masked area and leaving a second region of the initial component unmasked to form an exposed area; heat treating the initial component at a first treatment temperature in a first treatment environment that comprises nitrogen to transform at least a portion of the magnetic ferrous phase in the exposed area into a non-magnetic austenite phase; and after heat treating at the initial component at the first treatment temperature, heat treating the initial component at a second treatment temperature that is below a nitride solvus temperature of the magnetic ferrous phase to form nitride precipitates.

The method of any clause herein, wherein the first treatment temperature is above the nitride solvus temperature of the magnetic ferrous phase.

The method of any clause herein, wherein the second treatment temperature is at least 10 °C below the nitride solvus temperature.

The method of any clause herein, wherein heat treating the initial component at the second treatment temperature is performed in a second treatment environment that is different than the first treatment environment.

The method of any clause herein, wherein heat treating the initial component at the second treatment temperature is performed in a second treatment environment that comprises nitrogen.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A dual-phase magnetic component (100) comprising:
an intermixed first region (20) and second region (30) formed from a single material;
wherein the first region (20) comprises a magnetic ferrous composition; and
wherein the second region (30) comprises a non-magnetic austenite composition and a dispersion of nitride precipitates.

2. The dual-phase magnetic component (100) of claim 1, wherein the second region (30) comprises greater than or equal to 0.4% nitrogen by weight, and wherein the first region (20) comprises less than or equal to 0.1% nitrogen by weight.

3. The dual-phase magnetic component (100) of claim 1 or 2, wherein the dispersion of nitride precipitates form between greater than 0% and less than or equal to 13% of a cross-sectional area of the second region (30).

4. The dual-phase magnetic component (100) of any preceding claim, wherein second region (30) has a 0.2% yield stress at room temperature that is greater than or equal to 70 ksi.

5. The dual-phase magnetic component (100) of any preceding claim, wherein the first region (20) is substantially free of nitride precipitates.

6. The dual-phase magnetic component (100) of any preceding claim, wherein the single material comprises an iron chromium alloy.

7. A method of forming a dual-phase magnetic component (100) from an initial component (10) comprising a magnetic ferrous phase composition, the method comprising:
masking a first region (20) of the initial component (10) to form a masked area (21) and leaving a second region (30) of the initial component unmasked to form an exposed area (31); and
heat treating the initial component (10) at a treatment temperature in a treatment environment comprising nitrogen, the treatment temperature being below a nitride solvus temperature of the magnetic ferrous phase, to transform at least a portion of the magnetic ferrous phase in the exposed area into a microstructure comprising a non-magnetic austenite phase and a dispersion of nitride precipitates.

8. The method of claim 7, wherein the treatment temperature is at least 10 °C below the nitride solvus temperature.

9. The method of claim 7 or 8, wherein the treatment temperature is greater than or equal to 1000 °C and less than or equal to 1100 °C.

10. A method of forming a dual-phase magnetic component (100) from an initial component comprising a magnetic ferrous phase, the method comprising:
masking a first region (20) of the initial component to form a masked area and leaving a second region (30) of the initial component unmasked to form an exposed area;
heat treating the initial component at a first treatment temperature in a first treatment environment that comprises nitrogen to transform at least a portion of the magnetic ferrous phase in the exposed area into a non-magnetic austenite phase; and after heat treating at the initial component at the first treatment temperature, heat treating the initial component at a second treatment temperature that is below a nitride solvus temperature of the magnetic ferrous phase to form nitride precipitates.
